# EUROPÄISCHE PATENTSCHRIFT

(11) **EP 1 029 975 B1**
(45) Veröffentlichungstag und Bekanntmachung des Hinweises auf die Patenterteilung: **03.03.2004**
(21) Anmeldenummer: 99124596.0
(22) Anmeldetag: 10.12.1999
(51) Int. Cl.: D21F 1/70, D21B 1/32

(54) **Verfahren zur Entfernung von Störstoffen aus einer wässrigen Faserstoffsuspension**
Method for removing impurities from an aqueous fibre suspension
Procédé pour enlever des contaminants d'une suspension aqueuse de fibres

(30) Priorität: 16.02.1999 DE 19906327
(43) Veröffentlichungstag der Anmeldung: 23.08.2000
(60) Teilanmeldung: 03010991.2
(73) Patentinhaber: Voith Paper Patent GmbH, 89522 Heidenheim (DE)
(72) Erfinder: Aerdken, Arnold, 88213 Ravensburg (DE); Britz, Herbert, 88250 Weingarten (DE); Gommel, Axel, 88214 Ravensburg (DE); Hess, Harald, 88287 Grünkraut (DE); Holik, Herbert, 88213 Ravensburg (DE); Kemper, Martin, 88250 Weingarten (DE); Kriebel, Almut, 88250 Weingarten (DE); Möller, Dietrich, 88255 Baienfurt (DE); Selbherr, Anton, 88348 Bad Saulgau (DE); Schneid, Josef, 88267 Vogt (DE); Wenske, Rolf, 88276 Berg (DE)

(56) Entgegenhaltungen:
- EP-A- 0 798 416
- EP-A- 0 894 891
- WO-A-98/54403
- WO-A-99/61699

## Beschreibung

Die Erfindung betrifft ein Verfahren zur Entfernung von Störstoffen aus einer wässrigen Faserstoffsuspension gemäß dem Oberbegriff des Anspruchs 1.

Verfahren der genannten Art werden verwendet, um aus einer faserstoffhaltigen Suspension zumindest einen Teil der darin suspendierten Störstoffteilchen auszuscheiden. Bekanntlich wird bei einer Flotation ein die auszuscheidenden Stoffe enthaltender Schaum oder Schwimmschlamm gebildet. Ein typischer Anwendungsfall eines derartigen Verfahrens ist die Aufbereitung von einer aus bedrucktem Altpapier gewonnenen wässrigen Faserstoffsuspension, in der die Druckfarbenpartikel bereits von Fasern abgelöst sind, so daß sie sich ausflotieren lassen. Der hier beschriebene Flotationsvorgang nutzt die Unterschiede zwischen Faserstoff und unerwünschten Feststoffteilchen in der Art, daß der Faserstoff aufgrund seiner Hydrophilie in der Faserstoffsuspension verbleibt, während die angesprochenen Feststoffteilchen hydrophob sind und deshalb zusammen mit den Luftblasen in den Schaum gelangen. Neben den Druckfarbenpartikeln gibt es auch eine Vielzahl weiterer Stoffe, die hydrophob sind und sich daher durch Flotation von dem Faserstoff trennen lassen. Solche Stoffe sind insbesondere Kleber, feine Kunststoffpartikel und eventuell auch Harze. Wenn durch das Flotationsverfahren Fasern von Verunreinigungen getrennt, also nicht alle Feststoffpartikel aussortiert werden sollen, spricht man von selektiver Flotation. Der ebenfalls benutzte Begriff "Flotationsdeinking" wird in der Regel nicht nur für die Entfernung von Druckfarbenpartikeln (ink = Druckfarbe), sondern auch allgemeiner für die selektive Flotation von Verunreinigungen aus Faserstoffsuspensionen verwendet. Diese wird nicht nur daran gemessen, wieviel der Verunreinigungen/Störstoffe abgeschieden werden, sondern auch daran, wieviel Papierfasern unerwünschterweise mit dem Schaum verloren gehen sollen.

Der Stand der Technik bezüglich Flotationsverfahren für Faserstoffsuspensionen ist bereits sehr weit fortgeschritten. Daher gibt es Lösungen, welche durchaus geeignet sind, einen großen Teil der Feststoffpartikel durch Flotation zu entfernen. Da Flotationsanlagen sehr wichtige Funktionen erfüllen, ist es ein verständliches Ziel, deren Trenneffekt verbessern zu wollen.

Zum Beispiel ist aus der WO 98/54403 A eine Vorrichtung bekannt, die für das Entfernen von Störstoffen aus einer wässrigen Suspension geeignet ist. Dabei wird die zu reinigende Flüssigkeit zunächst mit Luft vermischt und dann über mehrere Injektoren am Umfang des Reaktionsgefäßes in dieses eingeführt, wobei Luft und Suspension dispergiert werden. Es gibt weiter oben liegende Injektoren für die verschmutzte Flüssigkeit und weiter unten liegende für aus dem bereits gebildeten Gutstoff abgezweigte und rezirkulierte Flüssigkeit. Der aufgeschwommene Schaum wird oben durch eine rotierende Leiste abgeschöpft. Die Patentanmeldung ist im wesentlichen auf Form und Art der rotierenden Einbauten gerichtet, die die Effizienz verbessern sollen, indem sie die Turbulenz der Flüssigkeit im Reaktionsgefäß aufrechterhalten.

Der Erfindung liegt daher die Aufgabe zugrunde, ein Flotationsverfahren zu schaffen, mit dem gute Reinigungsergebnisse erreichbar sind bei gleichzeitig möglichst geringem Verlust an Papierfasern.

Diese Aufgabe wird durch die kennzeichnenden Merkmale des Anspruchs 1 in vollem Umfang gelöst.

Weitere vorteilhafte Ausführungsformen der Erfindung sind in den abhängigen Ansprüchen angegeben.

Mit Hilfe des erfindungsgemäßen Verfahrens wird eine optimale Ausnutzung der eingesetzten Mittel möglich. Die unbelüftete Faserstoffsuspension wird direkt in den aufsteigenden Schaum zugegeben. Er trifft also auf einen bereits gebildeten Luftblasenverbund mit sich dazwischen befindenden Flüssigkeitskanälen. Durch den Zustrom der Faserstoffsuspension von oben und den Abzug des Gutstoffes unten wird in einem Kanal eine abwärts gerichtete Transportströmung erzeugt, der die Steigbewegung der Gasblasen überlagert ist. Auf diese Weise entsteht eine Gegenstrombewegung. D.h., daß die "schmutzigste" Suspension mit den bereits sehr stark beladenen Luftblasen in Kontakt kommt, auf dem Weg nach unten ständig sauberer wird, wobei auch die dann angetroffenen Luftblasen weniger Schmutzfracht tragen. Wichtig ist ein guter Stoffaustausch zwischen der Faserstoffsuspension und den Luftblasen, denn die in der Suspension verteilten Störstoffpartikel müssen mit der Oberfläche der Luftblasen so in Kontakt gebracht werden, daß sie daran haften bleiben. Andererseits sollen bereits anhaftende Störstoffpartikel nicht mehr abgerissen werden. Das Verfahren ist auch darauf gerichtet, die axiale Rückvermischung des schmutzhaltigen Schaumes mit der Suspension zu verhindern. Es könnte nämlich bei der Kanalströmung ein unerwünschter Effekt dadurch auftreten, daß Ungleichmäßigkeiten, über den Querschnitt betrachtet, zu einer unkontrollierbaren aufwärts gerichteten Schleppströmung führen. Diese würde die gewünschte definierte Gegenstrombewegung stören und bereits Getrenntes wieder vermischen.

Die Erfindung und ihre Vorteile werden erläutert anhand von Zeichnungen. Dabei zeigen:
- Fig. 1: Flotationsvorrichtung zur Durchführung des erfindungsgemäßen Verfahrens;
- Fig. 2 bis 5: Varianten von Strömungseinbauten in den Kanal;
- Fig. 6 bis 11: Varianten zur Suspensionszugabe.

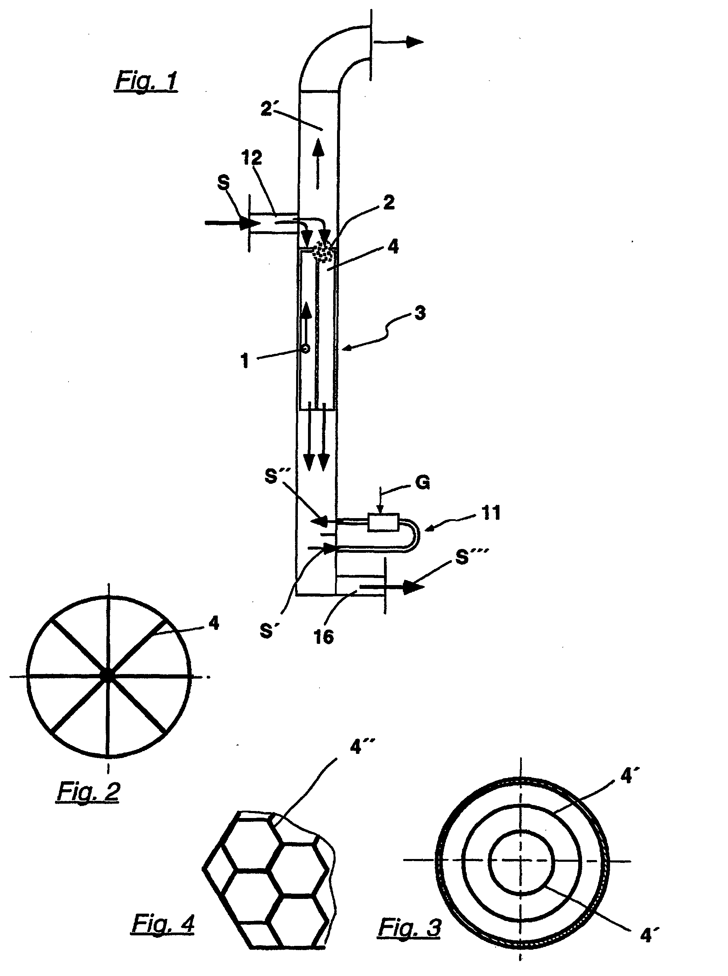

Die Fig. 1 zeigt eine Flotationsvorrichtung, die zur Durchführung des Verfahrens geeignet ist. Sie ist sehr schematisch dargestellt und soll lediglich die Funktionen erläutern. Die Faserstoffsuspension S wird über ein Einlaufrohr 12 in eine hier senkrecht stehende Blasensäule eingeführt. Dabei erfolgt die Zugabe in die Blasensäule an einer Stelle, an der sich bereits Flotationsschaum 2 befindet. Aufgrund der anliegenden Druckverhältnisse wird die Faserstoffsuspension S nach unten befördert, wobei hier eine Strömung mit aufsteigenden Gasblasen 1 entgegenkommt. Dadurch findet in dem Kanal 3, der sich in der Regel unmittelbar unterhalb des Einlaufrohrs 12 befindet, ein reger Stoffaustausch statt, bei dem die auszuflotierenden Teile der Faserstoffsuspension S an die aufsteigenden Gasblasen 1 abgegeben werden. Natürlich müssen die Gasblasen schneller steigen als das sie umgebende Medium absinkt. Diese Vorgänge sind hier nur angedeutet und nicht maßstäblich. Der Kanal 3 weist Strömungsmittel auf, welche in dem hier dargestellten Fall senkrechte, sternförmige Führungsteile 4 sind. Sie stabilisieren die Gegenstrombewegung und verhindern unerwünschten Queraustausch. Im folgenden werden noch eine Anzahl weiterer Möglichkeiten gezeigt, solche Strömungsmittel auszuführen. Im unteren Teil der Blasensäule befindet sich der Auslaß 16, durch den die Faserstoffsuspension S in gereinigter Form als Gutstoff S''' abgeführt wird. Das zur Erzeugung der Gasblasen 1 dienende Gas wird durch einen Belüftungskreislauf 11 in die Blasensäule zugegeben. Der Belüftungskreislauf 11 ist hier so ausgeführt, daß an einer bestimmten Stelle der Blasensäule ein Teilstrom S' aus der Faserstoffsuspension abgeführt, mit Gas G vermischt und oberhalb dieser Stelle als belüftete Suspension S" zugeführt wird. In den allermeisten Fällen wird für die Blasen Luft genommen, es kann aber auch vorteilhaft sein, andere Gase, z.B. mit einer anderen Dichte, einzusetzen. Durch diesen Belüftungskreislauf 11 lassen sich die erforderlichen Gasblasen definiert erzeugen, besonders was die Blasengröße und Blasenmenge betrifft. Hinzu kommt, daß es auch an dieser Stelle möglich ist, durch Aufbringung entsprechender Energie die auszuflotierenden Partikel an die Gasblasen anzukoppeln. Hier wird zwar eine relativ saubere Suspension vorliegen, aber gerade für die Teilchen, die hier noch vorhanden sind, besteht die Gefahr, daß sie in den Gutstoff gelangen. Andere - nicht gezeichnete - Möglichkeiten, den Belüftungskreislauf 11 zu gestalten, sind darin, daß der Abzug des Teilstroms oberhalb und die Zufuhr des belüfteten Stromes unterhalb erfolgt. Sie können auch beide auf der gleichen Ebene sein.

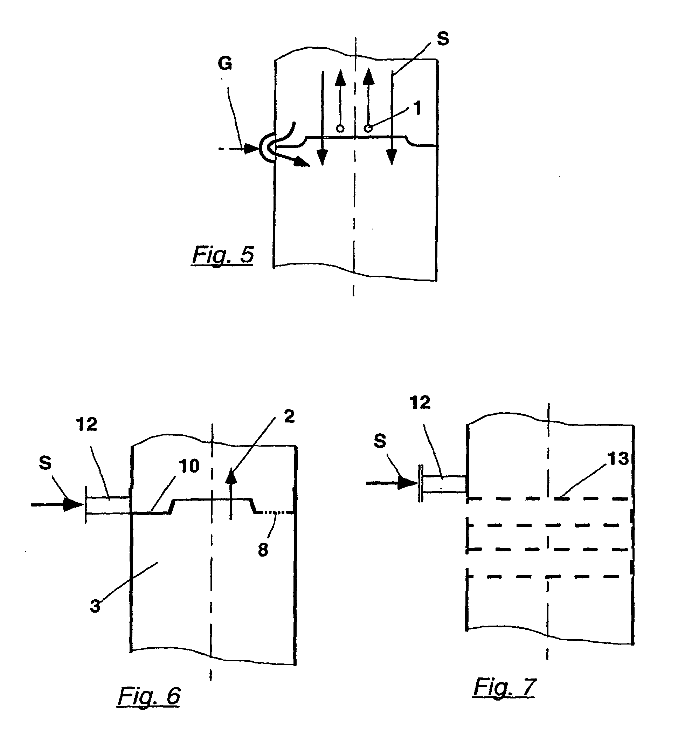

In Fig. 2 sind insbesondere die sternförmigen Führungsteile 4 in Ansicht von oben gezeichnet. Weitere Varianten solcher im wesentlichen senkrecht sich erstreckenden Führungsteile sind gemäß Fig. 3 konzentrische Ringe 4' oder gemäß Fig. 4 Führungsteile 4" mit Wabenstruktur.

Eine Verbesserung des Stoffaustausches läßt sich auch dadurch erreichen, daß die Strömungsmittel so angewandt werden, daß Teile der Faserstoffsuspension S aus dem Kanal 3 herausgeleitet und dann wieder zurückgeführt werden. Eine solche Möglichkeit zeigt die Fig. 5. Es ist dann auch möglich, eine zusätzliche Begasung an dieser Stelle durchzuführen.

Auch verschiedene Methoden, um die Faserstoffsuspension S in die Blasensäule zuzugeben, werden anhand von Figuren erläutert. Diese sind aber jeweils nur als besonders geeignete Beispiele zu betrachten.

In Fig. 6 ist der oberhalb des Kanals 3 liegende Bereich gezeichnet mit dem Einlaufrohr 12 für die Faserstoffsuspension S. Das Einlaufrohr 12 ist an eine Rinne 10 angeschlossen, welche hier ringförmig an der Außenwand der Blasensäule entlang ausgestaltet ist. Diese Rinne 10 kann Öffnungen 8 enthalten, welche die Faserstoffsuspension S gleichmäßig verteilen, oder sie kann mit einem Wehr versehen sein, über das die Suspension überströmt. Das Wehr kann z.B. auch gezackt sein. Wenn ein Wehr verwendet wird, kann durch entsprechende - hier nicht gezeichnete - abwärts gerichtete Führungsteile, z.B. Ringe, ein Rieselfilm erzeugt werden, welcher den Stoffaustausch infolge größerer Flüssigkeitsoberfläche entscheidend verbessert.

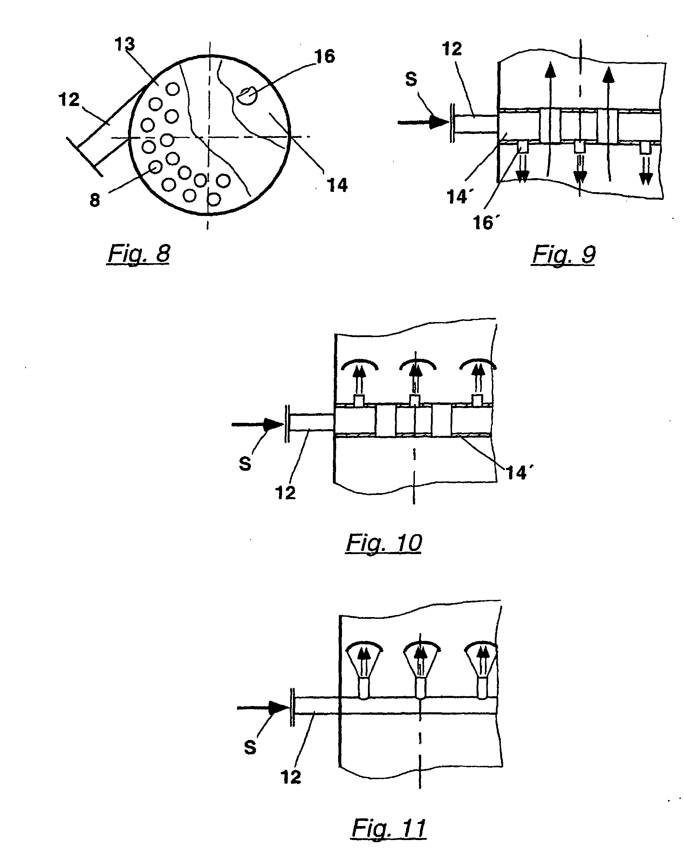

Eine andere Möglichkeite besteht darin, mit einem oder mehreren Lochböden 13 gemäß Fig. 7 die zugegebene Suspension zu verteilen und mit den Luftblasen in Kontakt zu bringen. In diesem Zusammenhang ist darauf hinzuweisen, daß die Strömungseinbauten, die sich im Kanal 3 befinden, durchaus geeignet sind, die zugegebene Faserstoffsuspension S gleichmäßig über den Querschnitt zu verteilen. Außerdem kann es von Vorteil sein, wenn die Faserstoffsuspension S an mehreren Stellen zugegeben wird, welche im Niveau übereinander liegen.

Die Fig. 8 zeigt die Zugabe über einen Lochboden 13 in Ansicht von unten. Der Lochboden 9 kann mit einfachen Öffnungen 8 versehen sein. Es kann aber auch ein Düsenboden 14 verwendet werden, von dem ein Teil ebenfalls in Fig. 8 angedeutet ist, wobei hier Schirmdüsen verwendet werden, die der besseren Verteilung und eventuell Dispergierung dienen.

Fig. 9 zeigt den Teil eines speziellen Düsenbodens 14', der als Doppelboden ausgeführt ist und eine Anzahl von nach unten gerichteten Düsen 16' aufweist. Ein solcher Doppeldüsenboden kann sich über die gesamte Querschnittsfläche der Blasensäule erstrecken, wenn in ihm Durchströmöffnungen für den von unten nach oben geführten Schaumstrom vorhanden sind. Durch das Eindüsen in den Schaum unterhalb des Düsenbodens ergibt sich ein guter Stoffkontakt und eine gute Verteilung.

Es besteht, wie Fig. 10 zeigt, auch die Möglichkeit, einen Düsenboden so zu verwenden, daß die aus ihm austretenden Suspensionsstrahlen nach oben gerichtet sind. Diese können gegen Strömungsbremsen treffen und dadurch zerteilt werden. In der Technik sind auch eine Vielzahl von Ventilen bekannt, mit denen aus dem Düsenboden austretende Strahlen im Medium verteilt werden können. Einfacher und oft ausreichend ist es, die Düsen auf in die Blasensäule hineinragende Rohrleitungen aufzusetzen (siehe Fig. 11). Dabei können sie nach oben oder nach unten gerichtet werden.

## Patentansprüche

1. Verfahren zur Entfernung von Störstoffen aus einer wässrigen Faserstoffsuspension (S),
bei der Gasblasen (1) in einer Flüssigkeit erzeugt werden,
mit Hilfe der Gasblasen (1) ein gegen das Schwerefeld aufsteigender Schaum (2) gebildet wird,
die Störstoffe an die Gasblasen (1) angelagert werden und
die Störstoffe zusammen mit den Gasblasen (1) in einem Flotationsschaum (2') abgeführt werden,
**dadurch gekennzeichnet,**
**daß** die Faserstoffsuspension (S) dem Schaum (2) zugegeben wird,
**daß** die Faserstoffsuspension (S) anschließend in mindestens einem Kanal (3) gegen die Steigrichtung des Schaumes (2) durch diesen hindurchgeführt wird, wodurch eine Gegenstrombewegung entsteht,
**daß** die Faserstoffsuspension (S) Störstoffe an den Schaum (2) abgibt und dann in gereinigter Form als Gutstoff (S''') abgeführt wird,
**daß** im Kanal (3) Strömungseinbauten verwendet werden, welche sich in
vertikaler Richtung über einen Teil des Strömungsquerschnitts im Kanal (3) erstrecken und im Kanal (3) eine axiale Rückvermischung von bereits mit Störstoffen angereichertem Schaum (2) mit der Faserstoffsuspension (S) weitestgehend verhindern.

2. Verfahren nach Anspruch 1,
**dadurch gekennzeichnet,**
**daß** der Kanal (3) senkrecht ist.

3. Verfahren nach Anspruch 1,
**dadurch gekennzeichnet,**
**daß** die Strömungseinbauten sternförmige Führungsteile (4) sind.

4. Verfahren nach Anspruch 1,
**dadurch gekennzeichnet,**
**daß** die Strömungseinbauten konzentrische Ringe (4') sind.

5. Verfahren nach Anspruch 1,
**dadurch gekennzeichnet,**
**daß** die Strömungseinbauten Führungsteile (4") mit Wabenstruktur sind.

6. Verfahren nach Anspruch 1,
**dadurch gekennzeichnet,**
**daß** die Strömungseinbauten Rohrbündel sind.

7. Verfahren nach Anspruch 1 oder 2,
**dadurch gekennzeichnet,**
**daß** die Strömungseinbauten Teile der Faserstoffsuspension (S) aus dem Kanal (3) herausleiten und weiter unten wieder in diesen zurückführen.

8. Verfahren nach einem der voranstehenden Ansprüche,
**dadurch gekennzeichnet,**
**daß** die Zugabe der Faserstoffsuspension (S) in den Schaum (2) über eine mit Öffnungen (8) versehene Rinne (10) vorgenommen wird.

9. Verfahren nach Anspruch 8,
**dadurch gekennzeichnet,**
**daß** das Niveau in der Rinne (10) geregelt wird.

10. Verfahren nach einem der Ansprüche 1 bis 7,
**dadurch gekennzeichnet,**
**daß** die Zugabe der Faserstoffsuspension (S) in den Schaum (2) über einen Lochboden (13) erfolgt.

11. Verfahren nach einem der Ansprüche 1 bis 7,
**dadurch gekennzeichnet,**
**daß** die Zugabe der Faserstoffsuspension (S) in den Schaum (2) über einen Düsenboden (14, 14') erfolgt.

12. Verfahren nach Anspruch 11,
**dadurch gekennzeichnet,**
**daß** der Düsenboden (14, 14') mit aufschwimmenden Ventilen versehen ist.

13. Verfahren nach Anspruch 11 oder 12,
**dadurch gekennzeichnet,**
**daß** die Zugabe über einen Doppelboden erfolgt.

14. Verfahren nach Anspruch 11, 12 oder 13,
**dadurch gekennzeichnet,**
**daß** die Zugabe über einen Boden mit über die Weite der Öffnungen im Boden geregeltem Niveau erfolgt.

15. Verfahren nach Anspruch 11, 12, 13 oder 14,
**dadurch gekennzeichnet,**
**daß** die Zugabe über einen Boden mit integrierter Belüftung erfolgt.

16. Verfahren nach einem der Ansprüche 1 bis 7,
**dadurch gekennzeichnet,**
**daß** die Zugabe der Faserstoffsuspension (S) in den Schaum (2) über eine rotierende Rinne erfolgt.

17. Verfahren nach einem der Ansprüche 1 bis 7,
**dadurch gekennzeichnet,**
**daß** die Zugabe der Faserstoffsuspension (S) in den Schaum (2) über ein Verteillabyrinth mit einer oder mehreren Zugabestellen erfolgt.

18. Verfahren nach einem der Ansprüche 1 bis 7,
**dadurch gekennzeichnet,**
**daß** die Zugabe der Faserstoffsuspension (S) in den Schaum (2) über eine Füllkörpersektion mit einer oder mehreren Zugabestellen erfolgt.

19. Verfahren nach einem der Ansprüche 1 bis 7,
**dadurch gekennzeichnet,**
**daß** die Zugabe der Faserstoffsuspension (S) in den Schaum (2) über ein Metallgeflecht erfolgt.

20. Verfahren nach einem der Ansprüche 1 bis 7,
**dadurch gekennzeichnet,**
**daß** zur Zugabe der Faserstoffsuspension (S) in den Schaum (2) Rieselfilme gebildet werden.

21. Verfahren nach Anspruch 20,
**dadurch gekennzeichnet,**
**daß** die Rieselfilme von konzentrischen Ringen ablaufen.

22. Verfahren nach Anspruch 21,
**dadurch gekennzeichnet,**
**daß** der Einlauf tangential gewählt wird.

23. Verfahren nach Anspruch 20, 21 oder 22,
**dadurch gekennzeichnet,**
**daß** konzentrische Ringe verwendet werden, auf denen sich Erhebungen befinden, über die der Rieselfilm herabläuft.

24. Verfahren nach einem der Ansprüche 1 bis 7,
**dadurch gekennzeichnet,**
**daß** die Faserstoffsuspension (S) über Düsen in den Schaum (2) eingeführt wird.

25. Verfahren nach Anspruch 24,
**dadurch gekennzeichnet,**
**daß** Düsen Vollkegel- oder Hohlkegeldüsen sind.

26. Verfahren nach Anspruch 24 oder 25,
**dadurch gekennzeichnet,**
**daß** die Düsen Freistrahlen bilden, die nach oben gerichtet sind.

27. Verfahren nach Anspruch 24,
**dadurch gekennzeichnet,**
**daß** die Düsen Löffeldüsen sind.

28. Verfahren nach Anspruch 24, 25, 26 oder 27,
**dadurch gekennzeichnet,**
**daß** die Öffnungen (8) der Düsen variabel sind.

29. Verfahren nach Anspruch 28,
**dadurch gekennzeichnet,**
**daß** die Öffnungen (8) der Düsen mit einem geschlitzten Gummi versehen sind, der sich verformen läßt.

30. Verfahren nach Anspruch 24,
**dadurch gekennzeichnet,**
**daß** die Düsen mit Prallelementen versehen sind, auf die der Suspensionsstrahl auftrifft und dispergiert wird.

31. Verfahren nach Anspruch 30,
**dadurch gekennzeichnet,**
**daß** die Prallelemente rotieren.

32. Verfahren nach Anspruch 24,
**dadurch gekennzeichnet,**
**daß** die Düsen Spiraldüsen sind.

33. Verfahren nach Anspruch 24,
**dadurch gekennzeichnet,**
**daß** die Düsen Mehrphasendüsen sind.

34. Verfahren nach einem der Ansprüche 1 bis 7,
**dadurch gekennzeichnet,**
**daß** die Faserstoffsuspension (S) mit einer Rotationsströmung in den Schaum (2) eingetragen wird.

35. Verfahren nach einem der voranstehenden Ansprüche,
**dadurch gekennzeichnet,**
**daß** die Gasblasen (1) unterhalb des Kanals (3) der Faserstoffsuspension (S) zugeführt werden.

36. Verfahren nach Anspruch 35,
**dadurch gekennzeichnet,**
**daß** ein Belüftungskreislauf (11) gebildet wird, in dem ein Teilstrom (S') der Faserstoffsuspension (S) abgeführt, mit Gas (G) vermischt und der Faserstoffsuspension (S) erneut zugeführt wird.

37. Verfahren nach Anspruch 36,
**dadurch gekennzeichnet,**
**daß** die Zuführung der belüfteten Faserstoffsuspension (S'') oberhalb der Stelle erfolgt, von der aus der Teilstrom (S') der Faserstoffsuspension (S) abgezogen wurde.

38. Verfahren nach Anspruch 36 oder 37,
**dadurch gekennzeichnet,**
**daß** die Zuführung der belüfteten Faserstoffsuspension (S") unterhalb der Stelle erfolgt, von der aus der Teilstrom (S') abgezogen wurde.

39. Verfahren nach Anspruch 36 oder 37,
**dadurch gekennzeichnet,**
**daß** die Zuführung der belüfteten Faserstoffsuspension (S'') auf der gleichen Ebene erfolgt wie die von der aus der Teilstrom (S') abgezogen wurde.

40. Verfahren nach Anspruch 36, 37, 38 oder 39,
**dadurch gekennzeichnet,**
**daß** die Einströmung der belüfteten Faserstoffsuspension (S') tangential erfolgt.

41. Verfahren nach einem der Ansprüche 36 bis 40,
**dadurch gekennzeichnet,**
**daß** die Belüftung des Teilstromes (S') in einem Stufendiffusor durchgeführt wird.

42. Verfahren nach einem der Ansprüche 36 bis 40,
**dadurch gekennzeichnet,**
**daß** die Belüftung des Teilstromes (S') in einer Venturi-Düse durchgeführt wird.

43. Verfahren nach Anspruch 42,
**dadurch gekennzeichnet,**
**daß** die Faserstoffsuspension in der Venturi-Düse einen Drall erhält.

44. Verfahren nach einem der Ansprüche 36 bis 40,
**dadurch gekennzeichnet,**
**daß** die Belüftung des Teilstromes (S') in mindestens einer Zweiphasendüse durchgeführt wird.

45. Verfahren nach Anspruch 35,
**dadurch gekennzeichnet,**
**daß** poröse Elemente zur Begasung der Faserstoffsuspension (S) verwendet werden.

46. Verfahren nach Anspruch 35,
**dadurch gekennzeichnet,**
**daß** die Begasung mit einer Membran erfolgt.

47. Verfahren nach Anspruch 35,
**dadurch gekennzeichnet,**
**daß** die Begasung mit Hilfe eines Multi-Injektorbodens durchgeführt wird.

48. Verfahren nach Anspruch 35,
**dadurch gekennzeichnet,**
**daß** die Belüftung mit Hilfe eines drehbaren Inferators durchgeführt wird.

49. Verfahren nach Anspruch 35,
**dadurch gekennzeichnet,**
**daß** die Gasblasen dadurch erzeugt werden, daß in der Faserstoffsuspension (S) zunächst Luft gelöst wird und daß diese beim Wiedereintritt in den Flotationsbehälter durch Druckabfall unter Bildung von Gasblasen wieder frei wird.

50. Verfahren nach Anspruch 35,
**dadurch gekennzeichnet,**
**daß** das Gas eine Kugelpackung durchströmt und dabei Gasblasen in der Faserstoffsuspension (S) bildet.

## Claims

1. A method for removing anionic trash from an aqueous pulp suspension (S),
in which gas bubbles (1) are produced in a liquid,
a foam (2) which rises against the gravitational field is formed with the aid of the gas bubbles (1 ),
the anionic trash is attached to the gas bubbles (1) and
the anionic trash together with the gas bubbles (1) is carried off in a flotation froth (2"),
**characterised in that**
that the pulp suspension (S) is added to the foam (2),
that the pulp suspension (S) is then passed therethrough in at least one duct (3) counter to the direction of ascent of the foam (2), which produces a countercurrent movement,
that the pulp suspension (S) releases anionic trash to the foam (2) and then is carried off in cleaned form as accepted stock (S'''),
that flow fittings are used in the duct (3) which extend in the vertical direction over part of the flow cross-section in the duct (3) and very largely prevent axial back-mixing of foam (2) already enriched with anionic trash with the pulp suspension (S) in the duct (3).

2. A method according to Claim 1, **characterised in that** the duct (3) is vertical.

3. A method according to Claim 1, **characterised in that** the flow fittings are star-shaped guidance parts (4).

4. A method according to Claim 1, **characterised in that** the flow fittings are concentric rings (4').

5. A method according to Claim 1, **characterised in that** the flow fittings are honeycomb-structure guidance parts (4").

6. A method according to Claim 1, **characterised in that** the flow fittings are bundles of tubes.

7. A method according to Claim 1 or 2, **characterised in that** the flow fittings guide portions of the pulp suspension (S) out of the duct (3) and return them thereto further below.

8. A method according to one of the preceding claims, **characterised in that** the pulp suspension (S) is added to the foam (2) via a channel (10) provided with openings (8).

9. A method according to Claim 8, **characterised in that** the level in the channel (10) is regulated.

10. A method according to one of Claims 1 to 7, **characterised in that** the pulp suspension (S) is added to the foam (2) via a perforated base (10).

11. A method according to one of Claims 1 to 7, **characterised in that** the pulp suspension (S) is added to the foam (2) via a nozzle base (14, 14').

12. A method according to Claim 11, **characterised in that** the nozzle base (14, 14') is provided with floating valves.

13. A method according to Claim 11 or 12, **characterised in that** the addition takes place via a double base.

14. A method according to Claim 11, 12 or 13, **characterised in that** the addition takes place via a base with a level regulated by the width of the openings in the base.

15. A method according to Claim 11, 12, 13 or 14, **characterised in that** the addition takes place via a base with integrated aeration.

16. A method according to one of Claims 1 to 7, **characterised in that** the pulp suspension (S) is added to the foam (2) via a rotating channel.

17. A method according to one of Claims 1 to 7, **characterised in that** the pulp suspension (S) is added to the foam (2) via a distribution labyrinth with one or more addition points.

18. A method according to one of Claims 1 to 7, **characterised in that** the pulp suspension (S) is added to the foam (2) via a packing section with one or more addition points.

19. A method according to one of Claims 1 to 7, **characterised in that** the pulp suspension (S) is added to the foam (2) via a metal mesh.

20. A method according to one of Claims 1 to 7, **characterised in that** falling films are formed for adding the pulp suspension (S) to the foam (2).

21. A method according to Claim 20, **characterised in that** the falling films run down from concentric rings.

22. A method according to Claim 21, **characterised in that** the inlet is selected to be tangential.

23. A method according to Claim 20, 21 or 22, **characterised in that** concentric rings are used, on which raised areas are located, across which the falling film runs down.

24. A method according to one of Claims 1 to 7, **characterised in that** the pulp suspension (S) is introduced into the foam (2) via nozzles.

25. A method according to Claim 24, **characterised in that** [the] nozzles are solid-cone or hollow-cone nozzles.

26. A method according to Claim 24 or 25, **characterised in that** the nozzles form free jets which are directed upwards.

27. A method according to Claim 24, **characterised in that** the nozzles are spoon nozzles.

28. A method according to Claim 24, 25, 26 or 27, **characterised in that** the openings (8) of the nozzles are variable.

29. A method according to Claim 28, **characterised in that** the openings (8) of the nozzles are provided with a slit rubber which can be deformed.

30. A method according to Claim 24, **characterised in that** the nozzles are provided with baffle elements on which the jet of suspension impinges and is dispersed.

31. A method according to Claim 30, **characterised in that** the baffle elements rotate.

32. A method according to Claim 24, **characterised in that** the nozzles are' spiral nozzles.

33. A method according to Claim 24, **characterised in that** the nozzles are multi-phase nozzles.

34. A method according to one of Claims 1 to 7, **characterised in that** the pulp suspension (S) is introduced into the foam (2) with a rotational flow.

35. A method according to one of the preceding claims, **characterised in that** the gas bubbles (1) are supplied to the pulp suspension (S) beneath the duct (3).

36. A method according to Claim 35, **characterised in that** an aeration circuit (11) is formed, in which a partial stream (S') of the pulp suspension (S) is carried off, mixed with gas (G) and resupplied to the pulp suspension (S).

37. A method according to Claim 36, **characterised in that** the supply of the aerated pulp suspension (S") takes place above the point from which the partial stream (S') of the pulp suspension (S) was withdrawn.

38. A method according to Claim 36 or 37, **characterised in that** the supply of the aerated pulp suspension (S") takes place beneath the point from which the partial stream (S') was withdrawn.

39. A method according to Claim 36 or 37, **characterised in that** the supply of the aerated pulp suspension (S") takes place on the same plane from which the partial stream (S') was withdrawn.

40. A method according to Claim 36, 37, 38 or 39, **characterised in that** the inflow of the aerated pulp suspension (S") takes place tangentially.

41. A method according to one of Claims 36 to 40, **characterised in that** the aeration of the partial stream (S') is carried out in a stepped diffuser.

42. A method according to one of Claims 36 to 40, **characterised in that** the aeration of the partial stream (S') is carried out in a venturi nozzle.

43. A method according to Claim 42, **characterised in that** a vortical motion is imparted to the pulp suspension in the venturi nozzle.

44. A method according to one of Claims 36 to 40, **characterised in that** the aeration of the partial stream (S') is carried out in at least one two-phase nozzle.

45. A method according to Claim 35, **characterised in that** porous elements are used for gassing the pulp suspension (S).

46. A method according to Claim 35, **characterised in that** the gassing takes place with a membrane.

47. A method according to Claim 35, **characterised in that** the gassing takes place using a multi-injector base.

48. A method according to Claim 35, **characterised in that** the aeration takes place using a rotary inferator.

49. A method according to Claim 35, **characterised in that** the gas bubbles are produced **in that** initially air is dissolved in the pulp suspension (S) and that it is released again upon re-entry into the flotation vessel by a drop in pressure, forming gas bubbles.

50. A method according to Claim 35, **characterised in that** the gas flows through spherical packing and in so doing forms gas bubbles in the pulp suspension (S).

## Revendications

1. Procédé destiné à l'élimination d'impuretés d'une suspension aqueuse de matières fibreuses (S), dans lequel
des bulles de gaz (1) sont générées dans un liquide,
une mousse (2) remontant à l'opposé du champ de pesanteur est engendrée à l'aide des bulles de. gaz (1),
les impuretés se fixent sur les bulles de gaz (1), et
les impuretés sont évacuées avec les bulles de gaz (1) dans une moussa de flottation (2'),
**caractérisé en ce que**
la suspension de matières fibreuses (S) est ajoutée à la mousse (2),
la suspension de matières fibreuses (S) est dirigée ensuite à travers la mousse (2) à l'opposé du sens de remontée de cette dernière dans au moins un canal (3), moyen par lequel est engendré un mouvement à contre-courant,
la suspension de matières fibreuses (S) délivre des impuretés à la mousse (2), et est ensuite évacuée à l'état épuré en tant que produit qualifié (S'''),
des inserts d'écoulement sont utilisés dans le canal (3), qui s'étendent en direction verticale sur une partie de la section transversale d'écoulement du canal (3) et qui, dans le canal (3), évitent dans une mesure maximale un mélange axial en retour de mousse (2) déjà enrichie en impuretés avec la suspension de matières fibreuses (S)

2. Procédé selon la revendication 1,
**caractérisé en ce que**
le canal (3) est vertical.

3. Procédé selon la revendication 1,
**caractérisé en ce que**
les inserts d'écoulement sont des éléments de guidage (4) en forme d'étoile.

4. Procédé selon la revendication 1,
**caractérisé en ce que**
les inserts d'écoulement sont des anneaux concentriques (4').

5. Procédé selon la revendication 1,
**caractérisé en ce que**
les inserts d'écoulement sont des éléments de guidage (4'') à structure alvéolaire.

6. Procédé selon la revendication 1,
**caractérisé en ce que**
les inserts d'écoulement sont des faisceaux tubulaires.

7. procédé selon la revendication 1 ou 2,
**caractérisé en ce que**
les inserts d'écoulement évacuent des parties de la suspension de matières fibreuses (S) du canal (3); et les ramènent à nouveau dans ce dernier au niveau d'un point plus bas.

8. Procédé selon l'une quelconque des revendications précédentes,
**caractérisé en ce que**
l'ajout de la suspension de matières fibreuses (S) à la mousse (2) est effectué par l'intermédiaire d'une goulotte (10) munie d'orifices (8).

9. Procédé selon la revendication 8,
**caractérisé en ce que**
le niveau est réglé dans la goulotte (10).

10. Procédé selon l'une quelconque des revendications 1 à 7,
**caractérisé en ce que**
l'ajout de la suspension de matières fibreuses (S) à la mousse (2) est effectué par l'intermédiaire d'un fond perforé (13).

11. Procédé selon l'une quelconque des revendications 1 à 7,
**caractérisé en ce que**
l'ajout de la suspension de matières fibreuses (S) à la mousse (2) est effectué par l'intermédiaire d'un plateau à buses (14, 14').

12. Procédé selon la revendication 11,
**caractérisé en ce que**
le plateau à buses (14, 14') est muni de clapets flottants.

13. Procédé selon la revendication 11 ou 12,
**caractérisé en ce que**
l'ajout est effectué par l'intermédiaire d'un fond double.

14. Procédé selon la revendication 11, 12 ou 13,
**caractérisé en ce que**
l'ajout est effectué par l'intermédiaire d'un fond avec un niveau réglé par l'intermédiaire de la largeur des orifices pratiqués dans le fond.

15. Procédé selon la revendication 11, 12, 13 ou 14,
**caractérisé en ce que**
l'ajout est effectué par l'intermédiaire d'un fond à aération intégrée.

16. Procédé selon l'une quelconque des revendications 1 à 7,
**caractérisé en ce que**
l'ajout de la suspension de matières fibreuses (S) à la mousse (2) est effectué par l'intermédiaire d'un goulotte rotative.

17. Procédé selon l'une quelconque des revendications 1 à 7,
**caractérisé en ce que**
l'ajout de la suspension de matières fibreuses (S) à la mousse (2) est effectué par l'intermédiaire d'un labyrinthe de distribution comportant un ou plusieurs points d'ajout.

18. Procédé selon l'une quelconque des revendications 1 à 7,
**caractérisé en ce que**
l'ajout de la suspension de matières fibreuses (S) à la mousse (2) est effectué par l'intermédiaire d'une section de corps de remplissage comportant un ou plusieurs points d'ajout.

19. Procédé selon l'une quelconque des revendications 1 à 7,
**caractérisé en ce que**
l'ajout de la suspension de matières fibreuses (S) à la mousse (2) est effectué par l'intermédiaire d'un treillis métallique.

20. Procédé selon l'une quelconque des revendications 1 à 7,
**caractérisé en ce que**
des films de ruissellement sont formés pour l'ajout de la suspension de matières fibreuses (S) à la mousse (2).

21. Procédé selon la revendication 20,
**caractérisé en ce que**
les films de ruissellement s'écoulent à partir d'anneaux concentriques.

22. Procédé selon la revendication 21,
**caractérisé en ce que**
l'entrée est choisie de façon tangentielle.

23. Procédé selon la revendication 20, 21 ou 22
**caractérisé en ce que**
il est utilisé des anneaux concentriques comportant des surélévations, par l'intermédiaire desquelles s'écoule le film de ruissellement.

24. Procédé selon l'une quelconque des revendications 1 à 7,
**caractérisé en ce que**
la suspension de maitères fibreuses (S) est injectée dans la mousse (2) par l'intermédiaire de buses,

25. Procédé selon la revendication 24,
**caractérisé en ce que**
les buses sont des buses à cône plein ou à cône creux.

26. Procédé selon la revendication 24 ou 25,
**caractérisé en ce que**
les buses engendrent des jets libres qui sont orientés vers le haut.

27. Procédé selon la revendication 24,
**caractérisé en ce que**
les buses sont des buses à cuillère.

28. Procédé selon la revendication 24, 25, 26 ou 27,
**caractérisé en ce que**
les orifices (8) des buses sont variables.

29. Procédé selon la revendication 28,
**caractérisé en ce que**
les orifices (8) des buses sont munis d'un caoutchouc fendu qui peut se déformer.

30. Procédé selon la revendication 24,
**caractérisé en ce que**
les buses sont munies d'éléments d'impact sur lesquels arrive et est dispersé le jet de suspension.

31. Procédé selon la revendication 30,
**caractérisé en ce que**
les éléments d'impacts effectuent des rotations.

32. Procédé selon la revendication 24,
**caractérisé en ce que**
les buses sont des buses en spirale.

33. Procédé selon la revendication 24,
**caractérisé en ce que**
les buses sont des buses multiphases.

34. Procédé selon l'une quelconque des revendications 1 à 7,
**caractérisé en ce que**
la suepension de matières fibreuses (S) est introduite dans la mousse (2) avec un écoulement rotationnel.

35. Procédé selon l'une quelconque des revendications précédentes,
**caractérisé en ce que**
les bulles de gaz (1) sont amenées dans la suspension de matières fibreuses (S) au-dessous du canal (3).

36. Procédé selon, la revendication 35,
**caractérisé en ce que**
il est engendré un circuit d'aération (11), dans lequel un courant partiel (S') de la suspension de matières fibreuses (S) est évacué, mélangé avec du gaz (G), et est à nouveau amené à la suspension de matières fibreuses (S).

37. Procédé selon la revendication 36,
**caractérisé en ce que**
l'amenée de la suspension de matières fibreuses aérée (S'') est effectuée au-dessus de l'emplacement à partir duquel a été soutiré le courant partiel (S') de la suspension de matières fibreuses (S).

38. Procédé selon la revendication 36 ou 37,
**caractérisé en ce que**
l'amenée de la suspension de matières fibreuses aérée (S'') est effectuée au-dessous de l'emplacement à partir duquel a été soutiré le courant partiel (S').

39. Procédé selon la revendication 36 ou 37,
**caractérisé en ce que**
l'amenée de la suspension de matières fibreuses aérée (S'') est effectuée sur le même plan que celui à partir duquel a été soutiré le courant partiel (S').

40. Procédé selon la revendication 36, 37, 38 ou 39,
**caractérisé en ce que**
l'entrée de la suspension de matières fibreuses aérée (S'') est effectuée de facon tangentielle.

41. Procédé selon l'une quelconque des revendications 36 à 40,
**caractérisé en ce que**
l'aération du courant partiel (S') est effectuée dans un diffuseur à gradins.

42. Procédé selon l'une quelconque des revendications 36 à 40,
**caractérisé en ce que**
l'aération du courant partiel (S') est effectuée dans un tube de venturi.

43. Procédé selon la revendication 42,
**caractérisé en ce que**
la suspension de matières fibreuses est soumise à un tourbillon dans le tube de venturi.

44. Procédé selon l'une quelconque des revendications 36 à 40,
**caractérisé en ce que**
l'aération du courant partiel (S') est effectuée dans au moins une buse diphasique.

45. Procédé selon la revendication 35,
**caractérisé en ce que**
des éléments poreux sont utilisés pour la gazéification de la suspension de matières fibreuses (S).

46. Procédé selon la revendication 35,
**caractérisé en ce que**
la gazéification est effectuée avec une membrane,

47. Procédé selon la revendication 35,
**caractérisé en ce que**
la gazéification est effectuée à l'aide d'un plateau à injecteurs multiples.

48. Procédé selon la revendication 35,
**caractérisé en ce que**
l'aération est effectuée à l'aide d'un inférateur rotatif.

49. Procédé selon la revendication 35,
**caractérisé en ce que**
les bulles de gaz sont générées par le fait que de l'air est dans un premier temps dissous dans la suspension de matières fibreuses (S) et que, lors du retour dans le réservoir de flottation, celui-ci se libère à nouveau sous l'effet de la chute de pression en formant des bulles de gaz.

50. Procédé selon la revendication 35,
**caractérisé en ce que**
le gaz traverse un empilement de sphères et forme ainsi des bulles de gaz dans la suspension de matières fibreuses (S).
